# EUROPÄISCHE PATENTSCHRIFT

(11) **EP 1 894 652 B1**
(45) Veröffentlichungstag und Bekanntmachung des Hinweises auf die Patenterteilung: **02.01.2013**
(21) Anmeldenummer: 07015736.7
(22) Anmeldetag: 10.08.2007
(51) Int. Cl.: B23B 45/00, B23B 49/02, B25H 1/00

(54) **Bohrvorrichtung**
Drilling device
Dispositif de perçage

(30) Priorität: 11.08.2006 DE 102006037910; 26.10.2006 DE 102006050432
(43) Veröffentlichungstag der Anmeldung: 05.03.2008
(73) Patentinhaber: MV Marketing GmbH & Co. KG Wieländer & Schill, 78054 Villingen-Schwenningen (DE)
(72) Erfinder: Lay, Norbert, Dr., 71149 Bondorf (DE); Eberle, Marcus, 70176 Stuttgart (DE); Strasser, Martin, 78073 Bad Dürrheim (DE)
(74) Vertreter: Herden, Andreas F.

(56) Entgegenhaltungen:
- DE-C- 806 749
- DE-U1- 9 318 014
- FR-A- 2 318 011
- JP-A- 7 186 136

## Beschreibung

### Gebiet der Erfindung

Die Erfindung betrifft eine Bohrvorrichtung, insbesondere eine Bohrvorrichtung zur Bearbeitung von Karosserieblechen.

### Hintergrund der Erfindung

Es ist aus der Praxis bekannt, in Karosseriebleche Bohrungen mit einer Handbohrmaschine einzubringen. Nachteilig an einem derartigen Vorgehen hat sich gezeigt, dass es zum einen mit Handbohrmaschinen oft nur sehr schwierig ist, das Werkzeug im rechten Winkel zur zu bearbeiteten Oberfläche auszurichten und ausgerichtet zu halten. Ein schräg ausgerichteter Bohrer hat zur Folge, dass es viel schneller zu Beschädigungen des Bohrers, etwa durch Herausbrechen der Kanten, oder zum Weglaufen des Bohrers kommt, wodurch das Blech großflächig beschädigt werden kann.

Weiter ist insbesondere bei hochfesten Blechen die Kraft, die zum Vorschub des Bohrers benötigt wird, recht hoch. Dies führt zu einer schnellen Ermüdung des Anwenders.

Aus der deutschen Gebrauchsmusterschrift DE 9318041 (IJOT Verbindungstechnik GmbH & Co. KG) ist eine Werkzeugmaschine bekannt, welche Saugnäpfe hat, um sich an der zu bearbeitenden Oberfläche festzuhalten und welche eine pneumatische Vorschubeinrichtung aufweist. Das Oberbegriff des Anspruchs 1 basiert sich auf diesem Dokument. Nachteilig an einer derartigen Pneumatik ist, dass diese zum einen sehr aufwändig ist und zu einem sehr großen und schweren Werkzeug führt. Darüber hinaus kann diese Werkzeugmaschine, falls sich die Saugnäpfe von der zu bearbeitenden Oberfläche ablösen, vom Benutzer nur unzureichend in ihrer Position gehalten werden. Schädigungen des Werkstücks durch eine Verschiebung der Werkzeugmaschine können die Folge sein.

Das Dokument FR 2 318 011 A zeigt eine Bohrvorrichtung mit einem tischförmigen Sockel, welcher an einem Werkstück befestigbar ist.

### Aufgabe der Erfindung

Der Erfindung liegt demgegenüber die Aufgabe zugrunde, die genannten Nachteile des Standes der Technik zu verringern.

Insbesondere ist Aufgabe der Erfindung, eine Bohrvorrichtung mit handbetriebenem Vorschub bereitzustellen, die vom Werker mit weniger Krafteinsatz betreibbar ist.

Weiter ist Aufgabe der Erfindung, für eine senkrechte Führung des Bohrers zu sorgen.

Eine weitere Aufgabe der Erfindung ist es, die Standzeiten der in der Bohrvorrichtung eingespannten Bohrer zu erhöhen.

Eine weitere Aufgabe der Erfindung ist es, Mittel bereitzustellen, welche dem Werker eine zu hohe Vorschubkraft, welche zur Beschädigung des Bohrers oder zu ungleichmäßigen Bohrungen führen kann, zu signalisieren.

### Zusammenfassung der Erfindung

Die Aufgabe der Erfindung wird bereits durch eine Bohrvorrichtung nach Anspruch 1 gelöst.

Bevorzugte Ausführungsformen und Weiterbildungen der Erfindung sind den jeweiligen Unteransprüchen zu entnehmen.

Danach ist eine Bohrvorrichtung vorgesehen, welche insbesondere zur Bearbeitung von Karosserieblechen ausgebildet ist.

Die Bohrvorrichtung umfasst einen Bohrer, der mit einem Antriebsmotor verbunden ist. Bei dem Antriebsmotor handelt es sich vorzugsweise um eine druckluftbetriebene Antriebsspindel, da derartige Motoren in äußerst kompakter Bauweise bereitgestellt werden können. Alternativ kann auch ein Elektromotor verwendet werden.

Die Bohrvorrichtung weist zwei Griffe zum manuellen Halten der Bohrvorrichtung auf. Diese Griffe gehen vorzugsweise T-förmig von der Bohrvorrichtung ab, so dass die Bohrvorrichtung an den beiden Griffen gehalten werden kann.

Weiter weist die Bohrvorrichtung Mittel zum temporären Festhalten der Bohrvorrichtung an dem zu bearbeitenden Werkstück auf, wobei über den oder die Griffe der Bohrer im Wesentlichen axial relativ zu den Mitteln zum temporären Festhalten der Bohrvorrichtung verschiebbar ist.

Die Bohrvorrichtung wird also über die Mittel zum temporären Festhalten der Bohrvorrichtung am Werkstück festgehalten und über die Griffe kann eine Kraft auf die Bohrspindel ausgeübt werden, wodurch der Vorschub des Bohrers erzeugt wird.

Erfindungsgemäß sind die zwei Griffe über eine Untersetzung mit dem Bohrer gekoppelt. Die Untersetzung führt dazu, dass der Vorschub des Bohrers beim Drücken am Griff verringert wird, wodurch die Kraft, die der Werker aufbringen muss, entsprechend sinkt.

Das Bereitstellen einer Untersetzung wird unter anderem dadurch ermöglicht, dass sich die Bohrvorrichtung gewissermaßen am Werkstück festhält und so dazu ausgebildet ist, die Kraft, die für den Vorschub benötigt wird, aufzunehmen.

Diese Ausgestaltung hat weiter den Vorteil, dass, sofern die ausgeübte Kraft die Kraft übersteigt, für welche die Mittel zum temporären Festhalten der Bohrvorrichtung ausgebildet sind, diese vom Werkstück abheben. Beim Abheben der Haltemittel merkt der Werker, dass die Vorschubkraft zu hoch ist und kann diese entsprechend reduzieren. So wird sichergestellt, dass der Bohrer nicht mit zu hohem Vorschub betrieben wird.

Gemäß der Erfindung ist die Untersetzung als Hebelgetriebe ausgebildet. Vorzugsweise werden dabei die Griffe als Hebelarm verwendet und wirken auf den Bohrer. Ein derartiges Hebelgetriebe erfordert eine vergleichsweise einfache Mechanik und nutzt zugleich die Hebelwirkung der Griffe, welche ohnehin zur besseren Führung des Werkzeugs relativ weit voneinander beabstandet sind.

Das Untersetzungsverhältnis beträgt bei einer bevorzugten Ausführungsform der Erfindung über 1,5, vorzugsweise über 2 und besonders bevorzugt über 3.

Bei einer Weiterbildung der Erfindung ist vorgesehen, eine nicht lineare Untersetzung bereitzustellen, etwa um beim Anbohren feinfühliger und mit geringerer Kraft den Bohrer vorschieben zu können, wohingegen sodann das Untersetzungsverhältnis erhöht wird und die aufzubringende Kraft sinkt.

Von Vorteil ist ein zumindest zweistufiger Bohrer. Dabei wird mit einer ersten Stufe vorgebohrt.

Die Mittel zum temporären Festhalten der Bohrvorrichtung umfassen gemäß der Erfindung Füße.

Vorzugsweise umfasst die Bohrvorrichtung zwei oder drei Füße.

Die Füße sind vorzugsweise auch über die Griffe der Bohrvorrichtung relativ zum Bohrer bewegbar.

Bei einer Weiterbildung der Erfindung ist die Bohrvorrichtung mit einem Anschlag am Werkstück anlegbar und die Füße sind über die Griffe der Bohrvorrichtung hinter den Anschlag bewegbar und so vom Werkstück abhebbar ausgebildet.

Dieses Ausführungsform hat den Vorteil, dass die Füße über die Griffe der Bohrvorrichtung vom Werkstück abgelöst werden können.

Dies ist insbesondere bei Magnetfüßen, wie sie für eine bevorzugte Ausführungsform der Erfindung vorgesehen sind, von Vorteil, da wegen der hohen aufzubringenden Kräfte starke Magnete verwendet werden.

Über die Untersetzung der Bohrvorrichtung ist auch bei starken Magneten ein relativ leichtes Anheben der Füße möglich.

Da die Magnetkraft schon bei geringer Entfernung stark abnimmt, brauchen die Füße nur wenige Millimeter abgehoben zu werden, und die komplette Bohrvorrichtung kann sodann leicht vom Werkstück abgehoben werden.

Alternativ oder in Kombination können statt Permanentmagneten auch Elektromagnete verwendet werden, welche vom Werker ein- und ausgeschaltet werden können.

Die Magnete sind vorzugsweise mit zumindest einer Abziehfolie versehen, um die Oberfläche des zu bearbeitenden Werkstücks zu schützen und um nach dem Bohren Späne leicht entfernen zu können.

Für die Bearbeitung von nicht magnetischen Flächen sind bei einer alternativen Ausführungsform der Erfindung Saugnäpfe als Füße vorgesehen. Es ist insbesondere vorgesehen, derartige Saugnäpfe über eine in dem Gerät integrierte Pneumatik zu steuern.

Insbesondere bei der Bearbeitung von nicht-magnetischen Werkstücken ist bei einer besonderen Ausführungsform der Erfindung vorgesehen, das Werkzeug mit Saugnäpfen oder Klemmvorrichtungen an den Kanten des Werkstücks zu halten.

Bei einer Weiterbildung der Erfindung ist insbesondere ein, vorzugsweise alle Füße abnehmbar.

So können zum einen verschieden Füße für verschiedene Anwendungen montiert werden, beispielsweise mit unterschiedlich starker Magnetkraft.

Es kann aber auch sein, dass eine Bohrung in einer Ecke gesetzt werden muss, in welche das Werkzeug aufgrund seiner Füße nicht hineinkommt. Der Werker kann dann die Füße abnehmen und die Bohrung ohne die Füße setzen. Die Untersetzung steht dann zwar nicht mehr zur Verfügung, die Bohrvorrichtung kann aber wie eine normale Handbohrmaschine verwendet werden.

Bei einer Weiterbildung der Erfindung weist die Bohrvorrichtung zwei Füße auf, wobei der Bohrer im Verhältnis zu einer Geraden, welche die Mittelpunkte der Füße miteinander verbindet, versetzt angeordnet ist. Insbesondere liegt der Bohrer im Wesentlichen auf oder außerhalb einer Geraden, welche tangential an den Füßen anliegt. So wird erreicht, dass der Bohrvorrichtung direkt an einer Kante heran eine Bohrung gesetzt werden kann, ohne dass die Füße abgenommen werden müssen.

Die Füße sind vorzugsweise als Gelenkfüße ausgebildet, um sich gekrümmten Flächen anpassen zu können.

Um den Bohrer besser ausrichten zu können, ist vorzugsweise zumindest ein Fuß verdrehbar ausgebildet.

Bei einer Weiterbildung der Erfindung weist die Bohrvorrichtung einen Anschlag zum Anlegen an dem Werkstück auf, welcher eine Markierung der Bohrstelle aufweist. Insbesondere ist ein Zielkreuz vorgesehen, welches die Bohrstelle markiert

Bei einer alternativen Ausführungsform der Erfindung kann die Bohrstelle auch über einen Lichtpunkt, insbesondere über einen Dioden-Laser markiert werden.

Auch der Anschlag ist vorzugsweise abnehmbar ausgebildet, um verschiedene Anschläge für unterschiedliche Aufgaben anzubringen oder um den Anschlag für bestimmte Anwendungen komplett zu entfernen.

Bei einer Weiterbildung der Erfindung ist in den Griff der Bohrvorrichtung zumindest ein Schalter zum Betätigen des Bohrers angeordnet. So braucht der Werker zum Betätigen der Bohrmaschine seine Hand nicht von den Griffen der Bohrvorrichtung abzunehmen.

Bei einer Weiterbildung der Erfindung sind auch Schalter zum Ein- und Ausschalten von an den Füßen angeordneten Elektromagneten oder zum Ein- und Ausschalten der Pneumatik für an den Füßen angeordnete Saugnäpfe vorgesehen.

Alternativ oder in Kombination kann die Bohrvorrichtung auch über Fußschalter bedient werden.

Bei einer Weiterbildung der Erfindung umfasst die Bohrvorrichtung ferner eine Führungsleiste, die auf das Werkstück auflegbar ist. Die Führungsleiste weist dabei Aussparungen für den Bohrer und Führungsmittel für die Füße der Bohrvorrichtung auf.

So können die zu bohrenden Stellen vor dem Setzen der Bohrung genau markiert werden und die Bohrvorrichtung kann dann zum Setzen der Bohrungen in die Führungsleiste eingesetzt werden.

Die Führungsleiste kann, wie bei einer besonderen Ausführungsform der Erfindung vorgesehen, als Magnetleiste ausgebildet sein, um an magnetischen Werkstücken befestigt werden zu können.

Alternativ oder in Kombination ist auch vorgesehen die Führungsleiste auf andere Art und Weise an dem Werkstück zu befestigen.

Bei einer weiteren Ausführungsform der Erfindung ist vorgesehen, eine ferromagnetische oder magnetische Leiste bereitzustellen, welche auch auf einem nichtferromagnetischem Werkstück angebracht werden kann. So kann die Führungsleiste angeklemmt werden, beispielsweise über Spannzangen oder aufgeklebt werden.

Da die Führungsleiste zumindest abschnittsweise ferromagnetisch ausgebildet ist oder Magnete umfasst, kann eine Bohrvorrichtung mit Magnetfüßen auch auf Werkstücken, welche keine ferromagnetischen Eigenschaften haben, verwendet werden.

Bei einer Weiterbildung der Erfindung sind die Führungsmittel auf der Führungsleiste verstellbar und können so individuell angepasst werden.

Gemäß der Erfindung kann eine Bohrvorrichtung bereitgestellt werden, bei welcher der Bohrer maximal 10°, vorzugsweise 5°, besonders bevorzugt 2,5° Toleranz zur Normalen des Werkstücks hat. Diese maximale Abweichung vom idealen Winkel, mit welchem der Bohrer angesetzt wird, wird durch die Führung des Bohrers in der erfindungsgemäßen Bohrvorrichtung erreicht.

Bei einer Weiterbildung der Erfindung ist die Bohrvorrichtung modular aufgebaut und umfasst vorzugsweise ein Bohrmodul, welches den Bohrer und die Antriebseinrichtung umfasst, ein Gehäusemodul, in welches das Bohrmodul eingesetzt wird, ein Fußmodul mit den Mitteln zum temporären Festhalten der Bohrvorrichtung am Werkstück sowie ein Zugmodul, welches die Untersetzung umfasst.

Der Bohrer ist dabei vorzugsweise bei in dem Gehäusemodul eingebautem Bohrmodul auswechselbar.

Die Erfindung betrifft des Weiteren eine Bohrvorrichtung, insbesondere eine Bohrvorrichtung mit einem oder mehreren zuvor dargestellten Markmalen. Die Bohrvorrichtung weist zumindest einen Fuß zum temporären Festhalten an einem Werkstück auf. Gemäß der Erfindung ist der zumindest eine Fuß über eine Untersetzung, insbesondere über ein Hebelgetriebe, von dem Werkstück abhebbar.

So wird besonders bei Magnetfüßen das Entfernen der Bohrvorrichtung erheblich erleichtert.

### Kurzbeschreibung der Zeichnungen

Die Erfindung soll im Folgenden unter Bezugnahme auf ein Ausführungsbeispiel anhand der Zeichnungen Fig. 1 bis Fig. 7 näher erläutert werden.

Es zeigen:
- Fig. 1: eine schematische Ansicht einer Bohrvorrichtung in einer perspektivischen Darstellung,
- Fig. 2: eine weitere schematische Ansicht einer Bohrvorrichtung in einer perspektivischen Darstellung,
- Fig. 3: eine schematische Ansicht eines Ausführungsbeispiels einer Bohrvorrichtung in einer Seitenansicht,
- Fig. 4: eine schematische Ansicht eines Ausführungsbeispiels einer Bohrvorrichtung von unten
- Fig. 5: eine schematische Schnittdarstellung eines Ausführungsbeispiels einer erfindungsgemäßen Bohrvorrichtung,
- Fig. 6: eine schematische Draufsicht eines Ausführungsbeispiels einer erfindungsgemäßen Bohrvorrichtung von oben,
- Fig. 7: eine schematische Darstellung einer Ausführungsform einer erfindungsgemäßen Leiste zur Führung der Bohrvorrichtung.
- Fig. 8: eine schematische Darstellung einer einer weiteren Ausführungsform zur Führung der Bohrvorrichtung.

### Detaillierte Beschreibung der Zeichnungen

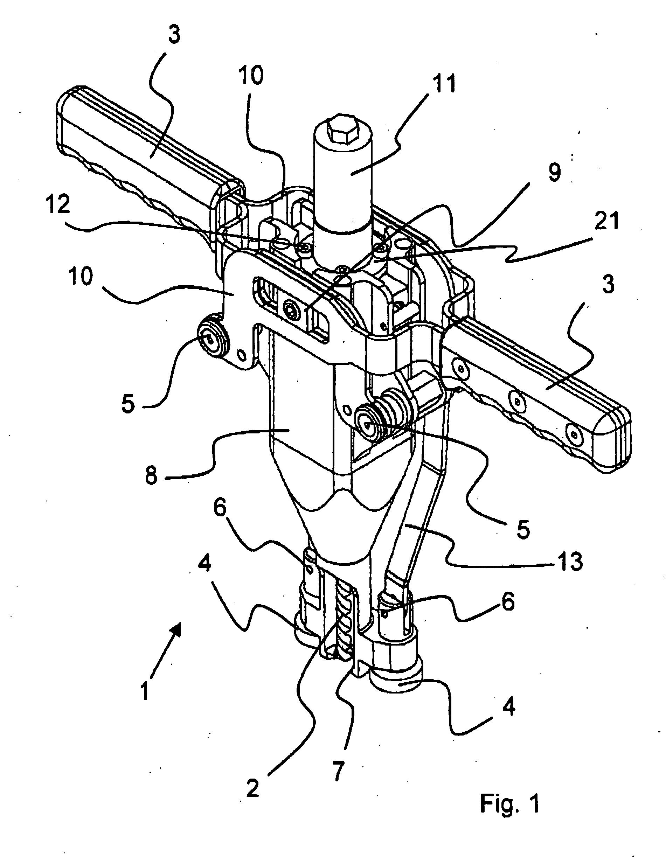

Bezug nehmend auf Fig. 1, welche schematisch eine perspektivische Ansicht eines Ausführungsbeispiels einer erfindungsgemäßen Bohrvorrichtung 1 zeigt, sollen die wesentlichen Bestandteile der Bohrvorrichtung 1 näher erläutert werden,

Die Bohrvorrichtung 1 umfasst einen Bohrer 2, welcher mit einer Bohrspindel 11, die als Antrieb des Bohrers 2 dient, verbunden ist. Die Bohrspindel 11 ist axial in einem Gehäuse 8 beweglich. Dazu ist die Bohrspindel 11 selbst in ein Gehäuse 21 eingebaut und kann nach Lösen der Schrauben 12 nach oben herausgezogen werden

Die Bohrvorrichtung 1 kann mit einem Anschlag 7 an dem Werkstück (nicht dargestellt) angelegt werden und verfügt über Magnetfüße 4 zum Festhalten an dem Werkstück.

Die Bohrvorrichtung 1 verfügt als Untersetzung über ein Hebelgetriebe, welches Griffe 3 zum manuellen Halten der Bohrvorrichtung 1 umfasst, die über Hebelarme 10, welche ein Langloch aufweisen, an den Gelenken 5 angeschlagen ist. Die Gelenke 5 sind am äußeren Gehäuse 8 der Bohrvorrichtung 1 angebracht.

Das Gehäuse 21 der Bohrspindel 11 beziehungsweise die Bohrspindel läuft in einer Führungskulisse 9 der Hebelarme 10.

Werden nun die Griffe 3 nach unten bewegt, so bewegt sich die Bohrspindel 11 axial zum Gehäuse 8.

Das Untersetzungsverhältnis des Hebelgetriebes beträgt in diesem Ausführungsbeispiel etwa 3,

Die Hebelarme 10 sind mit den Verbindungsstangen 13 verbunden, welche ihrerseits über die Gelenke 6 mit den Füßen 4 verbunden sind.

Setzt nun der Werker (nicht dargestellt) die Bohrvorrichtung 1 mit dem Anschlag 7 auf das Werkstück und bewegt die Griffe 3 in Richtung Werkstück, werden zunächst die Füße 4 auf die Werkstückoberfläche (nicht dargestellt) aufgesetzt. Ab diesem Zeitpunkt hält sich das Werkstück mit den Füßen 4, welches als Magnetfüße ausgebildet sind, an dem Werkstück fest. Der Bohrer 2 wird gleichzeitig mit den Füßen 4 vorgeschoben, dringt bis zum Aufsetzen der Füße 4 aber noch nicht in das Werkstück (nicht dargestellt) ein.

Über ein weiteres Herunterdrücken der Griffe 3 wird nun der Bohrer 2 weiter vorgeschoben und dringt in das Werkstück ein, um die Bohrung zu setzen. Beim Bohren wird die Bohrvorrichtung 1 durch die Magnetfüße am Werkstück festgehalten.

Überschreitet die ausgeübte Kraft die Haltekraft der Füße 4, heben diese vom Werkstück ab und der Werker weiß nun, dass er die Kraft reduzieren muss.

Beim Absetzen der Bohrvorrichtung 1 erfolgt das Vorstehende in umgekehrter Reihenfolge. Durch Anheben der Griffe 2 wird zunächst der Bohrer 2 aus dem Werkstück heraus gehoben. Stehen die Griffe ungefähr waagerecht, ist die Spitze des Bohrers bereits über dem Werkstück. Bewegt der Werker die Griffe 3 weiter nach oben, heben die Füße 4 vom Werkstück ab, in dem der Anschlag 7 gegen das Werkstück gedrückt wird und dabei die Bohrvorrichtung freigegeben wird.

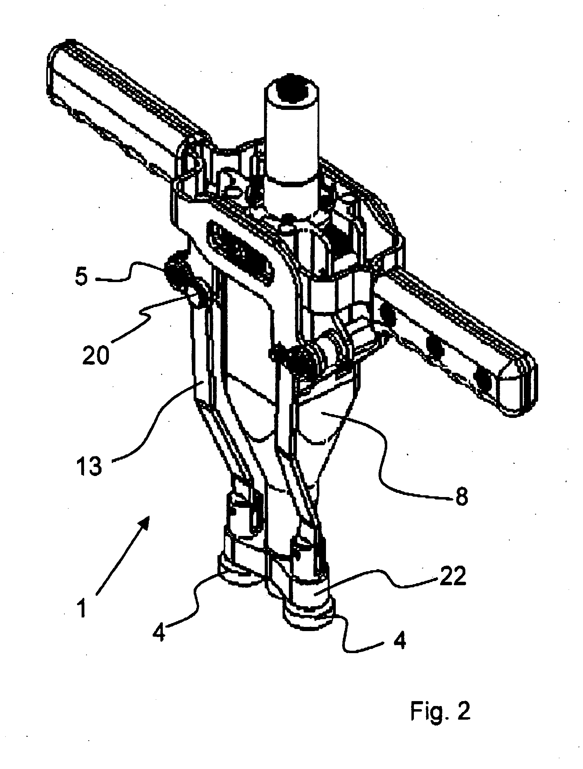

Bezugnehmend auf Fig. 2 soll die Mechanik der Füße 4 näher erläutert werden. Die Füße 4 sind über die Verbindungsstangen 13 mit den Hebelarmen 10 über die Gelenke 20 verbunden. Die Bewegungsmechanik der Füße 4 ist als Kniehebelgelenk ausgebildet.

So werden die Füße 4 ebenfalls über ein Hebelgetriebe bewegt. Die Füße werden ferner in einer Führung 22, die mit dem Gehäuse 8 verbunden ist, geführt.

An den Gelenken 6 befinden sich in den Verbindungsstangen 13 Langlöcher (nicht zu sehen), in denen die Füße 4 gelagert sind. Wird nun der Bohrer nach dem Absetzen der Füße weiter vorgeschoben, laufen die Führungsstangen 13 in den Langlöchern. Die Füße 4 bewegen sich dadurch nach dem Absetzen zumindest über eine begrenzte Strecke nicht weiter nach vorne.

So bleibt der Anschlag (7 in Fig. 1) auf der Oberfläche des Werkstücks aufgesetzt.

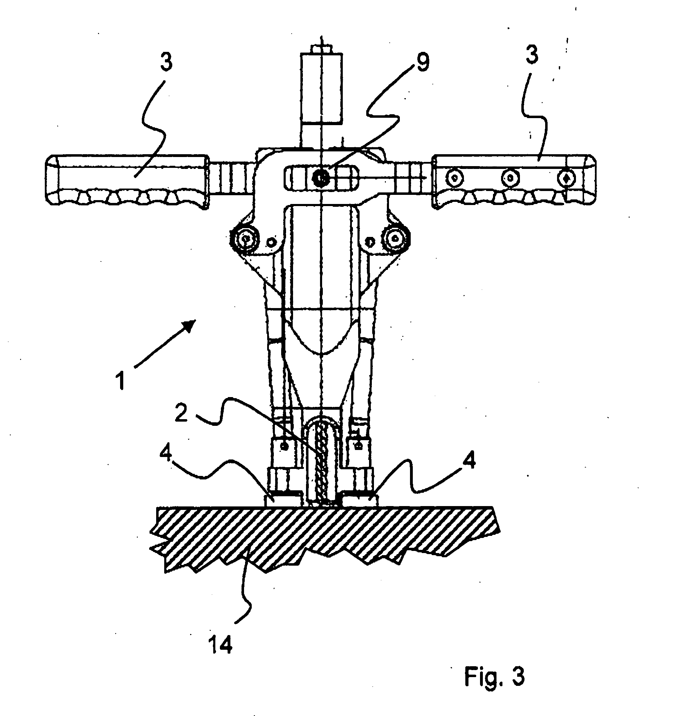

Fig. 3 zeigt die Bohrvorrichtung aus Fig. 1 in einer Seitendarstellung. Die Bohrvorrichtung 1 ist hier auf die Oberfläche eines Werkstücks 14 aufgesetzt. Die Griffe 3 sind schon so weit vorgeschoben, dass die Füße 4, welche als Magnetfüße ausgebildet sind, an der Oberfläche des Werkstücks 14 anliegen. Beim weiteren Herunterdrücken der Griffe wird eine Vorschubkraft erzeugt, wodurch der Bohrer 2 in das Werkstück 14 eindringt.

Die Bohrvorrichtung kann neben den mechanischen Komponenten elektrische und elektronische Komponenten wie Sensoren zur Kontrolle umfassen, etwa eine Tiefenanzeige für den Bohrer (nicht dargestellt), Drucksensoren, welche die Vorschubkraft überwache und/oder eine Drehzahlanzeige (nicht dargestellt).

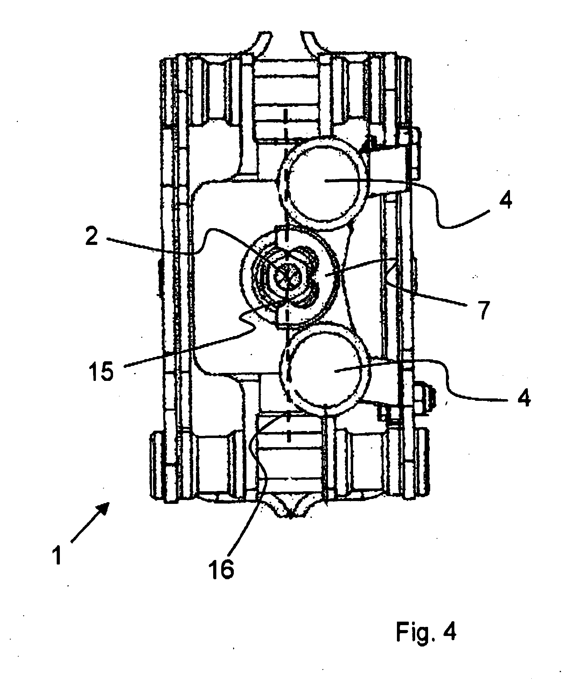

Bezug nehmend auf Fig. 4, welche die Bohrvorrichtung 1 in der Draufsicht von der Fußseite her zeigt, soll insbesondere die Vorrichtung zum temporären Festhalten der Bohrvorrichtung näher erläutert werden.

Zu erkennen sind zwei Magnetfüße 4, welche an der Werkstückoberfläche (nicht dargestellt) anlegbar sind, sowie der Bohrer 2.

Weiter umfasst die Bohrvorrichtung 1 einen Anschlag 7, welcher Spitzen 15 umfasst, um ein Zielkreuz auszubilden. Die Spitze des Bohrers 2, dessen Position über den Anschlag 7 markiert wird, befindet sich im Wesentlichen auf der gestrichelten Linie 16, welche tangential an den Füßen 4 anliegt. So kann bis direkt an eine Kante heran gebohrt werden.

Die Füße 4 sind darüber hinaus zur besseren Justierung des Werkzeugs um eine eigene Achse verdrehbar.

Bei einer weiteren Ausführungsform der Erfindung ist das gesamte Fußmodul gegenüber dem Gehäuse der Bohrvorrichtung verdrehbar (nicht dargestellt),

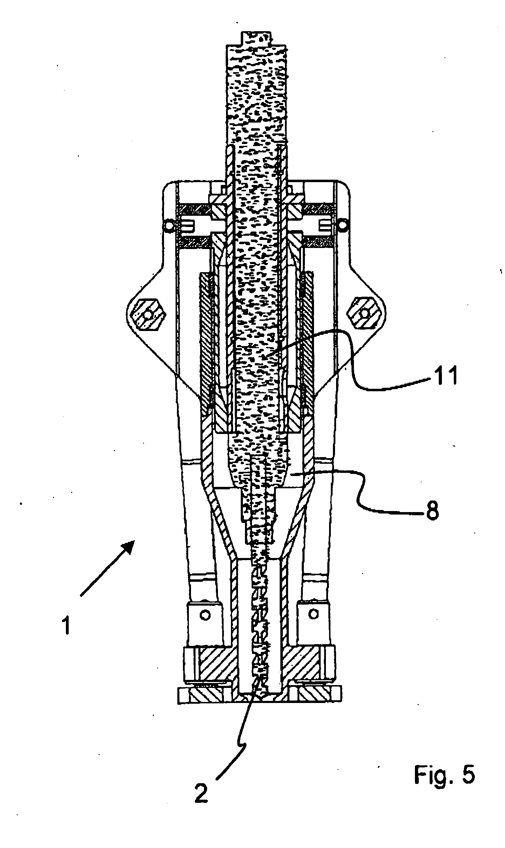

Fig. 5 zeigt schematisch eine Schnittansicht einer erfindungsgemäßen Bohrvorrichtung 1. Hier ist besonders zu erkennen, wie die Bohrspindel 11 in das Gehäuse eingebaut ist und mit dem Bohrer 2 verbunden ist, die Bohrspindel 11 weist eine Mechanik auf, über welche der Bohrer 2 austauschbar ist, ohne die Spindel aus dem Gehäuse 8 heraus zu schrauben.

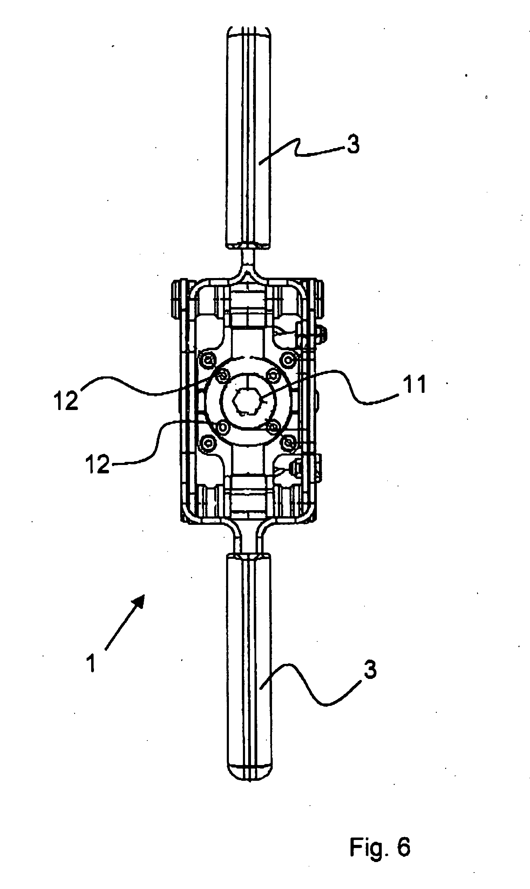

Fig. 6 zeigt schematisch eine Ausführungsform einer erfindungsgemäßen Bohrvorrichtung 1 in der Draufsicht von oben. Zu erkennen sind die Griffe 3, die in etwa T-förmig im oberen Bereich der Bohrvorrichtung und im Wesentlichen senkrecht von der Bohrvorrichtung 1 abgehen. Die Bohrspindel 11 ist nach Lösen der Schrauben 12 nach oben hin entnehmbar.

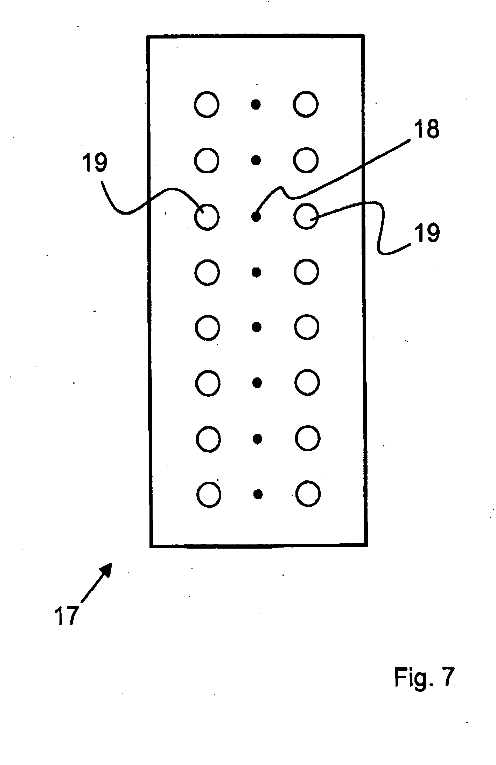

Fig. 7 zeigt schematisch eine Führungsleiste 17, wie sie zur genaueren Justierung des Bohrers oder zur Verwendung des Werkzeugs an einer nicht ferromagnetischen Oberfläche, beispielsweise einer Aluminiumkarosserie, verwendet werden kann.

Die Führungsleiste 17 ist aus ferromagnetischem Material ausgebildet und weist Aussparungen 18 zur Markierung der Bohrlöcher sowie Führungsmittel 19 zur Aufnahme der Füße der Bohrvorrichtung (nicht dargestellt) auf.

Ferner ist die Führungsleiste 17 auch an nicht magnetische Werkstücken mittel Spannzangen (nicht dargestellt) befestigbar. So ist eine Bearbeitung sämtlicher Materialien möglich.

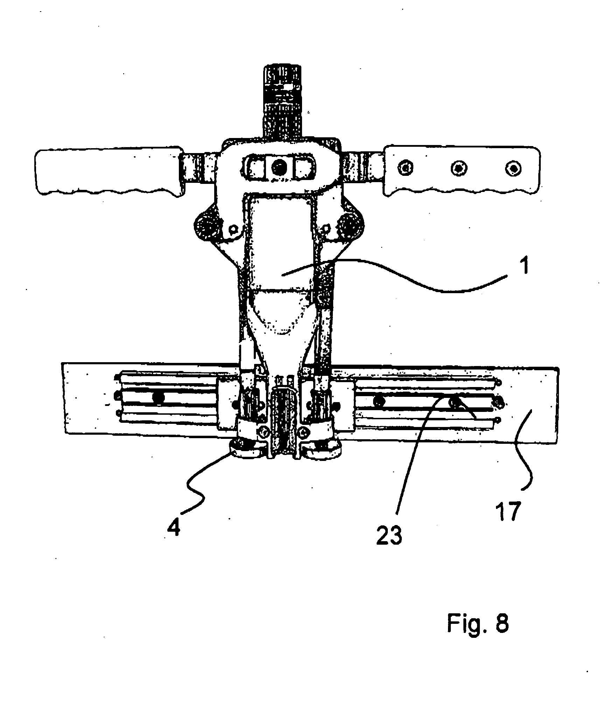

Bezug nehmend auf Fig. 8 soll eine alternative Ausführungsform einer Führungsleiste 17 näher erläutert werden. Vor der Führungsleiste 17 ist eine erfindungsgemäße Bohrvorrichtung 1 abgebildet. Die Führungsleiste 17 weist eine Schiene 23 auf, in welcher die Bohrvorrichtung 1 mit ihren Füßen 4 einschieb- oder einsetzbar ist. So kann die Bohrvorrichtung 1 parallel entlang der Schiene 23 verschoben werden. Die Führungsleiste 17 ist beispielsweise mittels Spannzangen (nicht dargestellt) an einer zu bearbeiteten Karosserie (nicht dargestellt) befestigbar.

Die erfindungsgemäße Bohrvorrichtung ist besondere zur Bearbeitung von Karosserieblechen, insbesondere von hochfesten Karosserieblechen, wie diese beispielsweise in den Bodengruppen von Fahrzeugen verwendet werden, ausgebildet. Derartige hochfeste Bleche, welche auch als "Tailored Sheeds", also Verbundwerkstoffbleche ausgebildet sind, zeichnen sich durch eine so hohe Festigkeit aus, so dass eine Bearbeitung mit herkömmlichen Bohrvorrichtungen nur mit großer Mühe möglich ist. Durch die erfindungsgemäße Bohrvorrichtung wird die Kraft, die der Werker aufbringen muss, wesentlich verringert, die Führung des Bohrers verbessert und zugleich der Verschleiß des Bohrers verringert.

Es versteht sich, dass die Erfindung nicht auf eine Kombination vorstehend beschriebener Merkmale beschränkt ist, sondern dass der Fachmann sämtliche beschriebenen Merkmale, soweit dies sinnvoll ist, kombinieren wird.

### Bezugszeichenliste

- 1: Bohrvorrichtung
- 2: Bohrer
- 3: Griff
- 4: Fuß
- 5: Gelenk
- 6: Gelenk
- 7: Anschlag
- 8: Gehäuse
- 9: Führungskulisse
- 10: Hebelarm
- 11: Bohrspindel
- 12: Schraube
- 13: Verbindungsstange
- 14: Werkstück
- 15: Spitze
- 16: gestrichelte Linie
- 17: Führungsleiste
- 18: Aussparung
- 19: Führungsmittel
- 20: Gelenk
- 21: Gehäuse der Bohrspindel
- 22: Führung
- 23: Schiene

## Patentansprüche

1. Bohrvorrichtung (1), insbesondere zur Bearbeitung von Blechen, umfassend:
- einen Bohrer (2) mit einem Antriebsmotor,
- zwei Griffe (3) zum manuellen Halten der Bohrvorrichtung (1),
- Mittel zum temporären Festhalten der Bohrvorrichtung an dem zu bearbeiteten Werkstück, welche Füße (4) umfassen,
- wobei über die Griffe (3) der Bohrer (2) im Wesentlichen axial vorschiebbar ist und **gekennzeichnet dadurch, dass** - die Griffe (3) über eine Untersetzung mit dem Bohrer gekoppelt sind, wobei die Untersetzung als Hebelgetriebe ausgebildet ist.

2. Bohrvorrichtung nach Anspruch 1, **dadurch gekennzeichnet, dass** die Griffe als Hebelarm (10) auf den Bohrer (2) wirken.

3. Bohrvorrichtung nach einem der vorstehenden Ansprüche, **dadurch gekennzeichnet, dass** das Untersetzungsverhältnis über 1,5, vorzugsweise über 2 und besonders bevorzugt über 3 beträgt.

4. Bohrvorrichtung nach einem der vorstehenden Ansprüche , **dadurch gekennzeichnet, dass** die Füße (4) über die Griffe (3) der Bohrvorrichtung bewegbar sind.

5. Bohrvorrichtung nach einem der vorstehenden Ansprüche, **dadurch gekennzeichnet, dass** die Bohrvorrichtung mit einem Anschlag (7) an dem Werkstück (14) anlegbar ist und wobei die Füße (4) über die Griffe (3) der Bohrvorrichtung hinter den Anschlag (7) bewegbar und so vom Werkstück abhebbar ausgebildet sind.

6. Bohrvorrichtung nach einem der vorstehenden Ansprüche, **dadurch gekennzeichnet, dass** die Füße (3) als Magnetfüße ausgebildet sind.

7. Bohrvorrichtung nach Anspruch 6, **dadurch gekennzeichnet, dass** die Magnete mit zumindest einer Abziehfolie versehen sind.

8. Bohrvorrichtung nach einem der Ansprüche 1 bis 5, **dadurch gekennzeichnet, dass** die Füße (3) als Saugnäpfe ausgebildet sind.

9. Bohrvorrichtung nach einem der vorstehenden Ansprüche, **dadurch gekennzeichnet, dass** zumindest ein Fuß (3) abnehmbar ist.

10. Bohrvorrichtung nach einem der vorstehenden Ansprüche, **dadurch gekennzeichnet, dass** die Bohrvorrichtung (1) zwei Füße (3) aufweist, wobei der Bohrer zu einer Geraden, welche die Mittelpunkte der Füße (3) miteinander verbindet, versetzt angeordnet ist.

11. Bohrvorrichtung nach Anspruch 10, **dadurch gekennzeichnet, dass** der Bohrer (2) im Wesentlich auf oder außerhalb einer Geraden liegen, welche tangential an den Füßen (3) anliegt.

12. Bohrvorrichtung nach einem der vorstehenden Ansprüche, **dadurch gekennzeichnet., dass** die Füße als Gelenkfüße ausgebildet sind.

13. Bohrvorrichtung nach einem der vorstehenden Ansprüche, **dadurch gekennzeichnet, dass** zumindest ein Fuß (3) verdrehbar ist.

14. Bohrvorrichtung nach einem der vorstehenden Ansprüche, **dadurch gekennzeichnet, dass** die Bewegung zumindest eines Fußes (3), vorzugsweise von allen Füßen (3), im Wesentlichen bis zur Höhe eines Anschlags, der am Werkstück (14) anlegbar ist, begrenzt ist.

15. Bohrvorrichtung nach einem der vorstehenden Ansprüche, **dadurch gekennzeichnet, dass** die Bohrrichtung einen Anschlag (7) zum Anlegen an dem Werkstück (14) aufweist, wobei der Anschlag (7) eine Markierung der Bohrstelle aufweist.

16. Bohrvorrichtung nach Anspruch 15, **dadurch gekennzeichnet, dass** der Anschlag (7) abnehmbar ist.

17. Bohrvorrichtung nach einem der vorstehenden Ansprüche, **dadurch gekennzeichnet, dass** in einem Griff der Bohrvorrichtung zumindest ein Schalter zum Betätigen des Bohrers angeordnet ist.

18. Bohrvorrichtung nach einem der vorstehenden Ansprüche, **dadurch gekennzeichnet, dass** die Bohrvorrichtung einen fußschalter zum Betätigen des Bohrers (2) aufweist.

19. Bohrvorrichtung nach einem der vorstehenden Ansprüche, weiter umfassend eine Führungsleiste (17), die auf das Werkstück (14) auflegbar ist und die Aussparungen (18) für den Bohrer und/oder Führungsmittel für die Füße der Bohrvorrichtung aufweist.

20. Bohrvorrichtung nach dem vorstehenden Anspruch, **dadurch gekennzeichnet, dass** die Führungsleiste Führungsmittel aufweist, welche verstellbar sind.

21. Bohrvorrichtung nach einem der vorstehenden Ansprüche, **dadurch gekennzeichnet, dass** die Bohrvorrichtung zumindest einen Neigungssensor aufweist.

22. Bohrvorrichtung nach einem der vorstehenden Ansprüche, **dadurch gekennzeichnet, dass** der Bohrer maximal 10°, vorzugsweise 5° und besonders bevorzugt 2,5° Toleranz zur Normalen zum Werkstück hat.

23. Bohrvorrichtung nach einem der vorstehenden Ansprüche, **dadurch gekennzeichnet, dass** die Bohrvorrichtung modular aufgebaut ist.

24. Bohrvorrichtung nach dem vorstehenden Anspruch, **dadurch gekennzeichnet, dass** die Bohrvorrichtung ein Bohrmodul und/oder eine Gehäusemodul und/oder ein Fußmodul und/oder ein Zugmodul aufweist.

25. Bohrvorrichtung nach einem der vorstehenden Ansprüche, **dadurch gekennzeichnet, dass** der Bohrer (2) bei eingebautem Antriebsmotor austauschbar ist.

## Claims

1. Drilling apparatus (1), in particular for machining metal sheets, comprising:
- a drill (2) with a drive motor,
- two handles (3) for manually holding the drilling apparatus (1),
- means for temporarily holding the drilling apparatus firmly on the workpiece to be machined, which means comprise feet (4),
- wherein the drill (2) can be advanced substantially in an axial manner by means of the handles (3), **characterised in that**
- the handles (3) are coupled to the drill via a step-down transmission, wherein the step-down transmission is formed as a lever transmission.

2. Drilling apparatus as claimed in claim 1, **characterised in that** the handles act as a lever arm (10) on the drill (2).

3. Drilling apparatus as claimed in any one of the preceding claims, **characterised in that** the step-down transmission ratio is greater than 1.5, preferably greater than 2 and particularly preferably greater than 3.

4. Drilling apparatus as claimed in any one of the preceding claims, **characterised in that** the feet (4) can be moved by means of the handles (3) of the drilling apparatus.

5. Drilling apparatus as claimed in any one of the preceding claims, **characterised in that** the drilling apparatus can be placed with a stop (7) on the workpiece (14) and wherein the feet (4) can be moved behind the stop (7) by means of the handles (3) of the drilling apparatus and are formed so as to be able to be lifted off the workpiece in this way.

6. Drilling apparatus as claimed in any one of the preceding claims, **characterised in that** the feet (4) are formed as magnetic feet.

7. Drilling apparatus as claimed in claim 6, **characterised in that** the magnets are provided with at least one pull-off film.

8. Drilling apparatus as claimed in any one of claims 1 to 5, **characterised in that** the feet (3) are formed as suction cups.

9. Drilling apparatus as claimed in any one of the preceding claims, **characterised in that** at least one foot (3) is removable.

10. Drilling apparatus as claimed in any one of the preceding claims, **characterised in that** the drilling apparatus (1) has two feet (3), wherein the drill is disposed in an offset manner with respect to a straight line which connects the centre points of the feet (3) to one another.

11. Drilling apparatus as claimed in claim 10, **characterised in that** the drill (2) is located substantially on or offset from a straight line which lies tangentially against the feet (3).

12. Drilling apparatus as claimed in any one of the preceding claims, **characterised in that** the feet are formed as articulated feet.

13. Drilling apparatus as claimed in any one of the preceding claims, **characterised in that** at least one foot (3) is rotatable.

14. Drilling apparatus as claimed in any one of the preceding claims, **characterised in that** the movement of at least one foot (3), preferably of all feet (3), is limited substantially to the height of a stop which can be placed on the workpiece (14).

15. Drilling apparatus as claimed in any one of the preceding claims, **characterised in that** the drilling apparatus has a stop (7) for placing on the workpiece (14), wherein the stop (7) has a marking for the drilling point.

16. Drilling apparatus as claimed in claim 15, **characterised in that** the stop (7) is removable.

17. Drilling apparatus as claimed in any one of the preceding claims, **characterised in that** at least one switch for operating the drill is disposed in one handle of the drilling apparatus.

18. Drilling apparatus as claimed in any one of the preceding claims, **characterised in that** the drilling apparatus has a foot-operated switch for operating the drill (2).

19. Drilling apparatus as claimed in any one of the preceding claims, further comprising a guide bar (17) which can be placed onto the workpiece (14) and has cutouts (18) for the drill and/or guide means for the feet of the drilling apparatus.

20. Drilling apparatus as claimed in the preceding claim, **characterised in that** the guide bar has guide means which are adjustable.

21. Drilling apparatus as claimed in any one of the preceding claims, **characterised in that** the drilling apparatus has at least one inclination sensor.

22. Drilling apparatus as claimed in any one of the preceding claims, **characterised in that** the drill has a maximum of 10°, preferably 5° and particularly preferably 2.5° tolerance with respect to the normal to the workpiece.

23. Drilling apparatus as claimed in any one of the preceding claims, **characterised in that** the drilling apparatus is modular in construction.

24. Drilling apparatus as claimed in the preceding claim, **characterised in that** the drilling apparatus has a drilling module and/or a housing module and/or a foot module and/or a pulling module.

25. Drilling apparatus as claimed in any one of the preceding claims, **characterised in that** the drill (2), with a built-in drive motor, is interchangeable.

## Revendications

1. Dispositif d'alésage (1), en particulier pour l'usinage de tôles, comprenant :
- un foret (2) avec un moteur d'entraînement,
- deux poignées (3) pour le maintien manuel dudit dispositif d'alésage (1),
- des moyens de maintien temporaire dudit dispositif d'alésage sur la pièce à usiner, lesquels comprennent des pieds (4),
- le foret (2) pouvant être avancé sensiblement axialement au moyen des poignées (3),
**caractérisé en ce que** les poignées (3) sont accouplées par une démultiplication au foret, ladite démultiplication étant réalisée comme un engrenage à levier.

2. Dispositif d'alésage selon la revendication 1, **caractérisé en ce que** les poignées agissent comme bras de levier (10) sur le foret (2).

3. Dispositif d'alésage selon l'une des revendications précédentes, **caractérisé en ce que** le rapport de démultiplication est supérieur à 1,5, préférentiellement supérieur à 2 et tout particulièrement supérieur à 3.

4. Dispositif d'alésage selon l'une des revendications précédentes, **caractérisé en ce que** les pieds (4) sont déplaçables au moyen des poignées (3) dudit dispositif d'alésage.

5. Dispositif d'alésage selon l'une des revendications précédentes, ledit dispositif d'alésage étant **caractérisé en ce qu'**il peut être appliqué par une butée (7) contre la pièce (14), et dans lequel les pieds (4) sont réalisés de manière à pouvoir être déplacés derrière la butée (7) au moyen des poignées (3) dudit dispositif d'alésage et soulevés ainsi au-dessus de la pièce.

6. Dispositif d'alésage selon l'une des revendications précédentes, **caractérisé en ce que** les pieds (3) sont réalises comme des pieds magnétiques.

7. Dispositif d'alésage selon la revendication 6, **caractérisé en ce que** les aimants sont pourvus d'au moins un film amovible.

8. Dispositif d'alésage selon l'une des revendications 1 à 5, **caractérisé en ce que** les pieds (3) sont réalisés comme ventouses.

9. Dispositif d'alésage selon l'une des revendications précédentes, **caractérisé en ce qu'**au moins un pied (3) est amovible.

10. Dispositif d'alésage selon l'une des revendications précédentes, ledit dispositif d'alésage (1) étant **caractérisé en ce qu'**il comporte deux pieds (3), le foret étant disposé en décalage par rapport à une droite qui relie les centres des pieds (3).

11. Dispositif d'alésage selon la revendication 10, **caractérisé en ce que** le foret (2) est sensiblement situé sur une droite tracée tangentiellement aux pieds (3), ou à l'extérieur de celle-ci.

12. Dispositif d'alésage selon l'une des revendications précédentes, **caractérisé en ce que** les pieds sont réalisés comme pieds articulés.

13. Dispositif d'alésage selon l'une des revendications précédentes, **caractérisé en ce qu'**au moins un pied (3) est rotatif.

14. Dispositif d'alésage selon l'une des revendications précédentes, **caractérisé en ce que** le déplacement d'au moins un pied (3), de préférence de tous les pieds (3), est sensiblement limité à la hauteur d'une butée applicable contre la pièce (14).

15. Dispositif d'alésage selon l'une des revendications précédentes, ledit dispositif d'alésage étant **caractérisé en ce qu'**il comporte une butée (7) applicable contre la pièce (14), ladite butée (7) présentant un marquage de l'emplacement d'alésage.

16. Dispositif d'alésage selon la revendication 15, **caractérisé en ce que** la butée (7) est amovible.

17. Dispositif d'alésage selon l'une des revendications précédentes, **caractérisé en ce qu'**au moins un commutateur d'actionnement du foret est disposé dans une poignée dudit dispositif d'alésage.

18. Dispositif d'alésage selon l'une des revendications précédentes, ledit dispositif d'alésage étant **caractérisé en ce qu'**il comporte un commutateur à pied pour l'actionnement du foret (2).

19. Dispositif d'alésage selon l'une des revendications précédentes, comprenant en outre une règle de guidage (17) applicable sur la pièce (14) et présentant des évidements (18) pour le foret et/ou des moyens de guidage pour les pieds dudit dispositif d'alésage.

20. Dispositif d'alésage selon la revendication précédente, **caractérisé en ce que** la règle de guidage présente des moyens de guidage qui sont réglables.

21. Dispositif d'alésage selon l'une des revendications précédentes, ledit dispositif d'alésage étant **caractérisé en ce qu'**il comporte au moins un capteur d'inclinaison.

22. Dispositif d'alésage selon l'une des revendications précédentes, **caractérisé en ce que** le foret a une tolérance maximale de 10°, préférentiellement de 5° et tout particulièrement de 2,5° par rapport à la normale à la pièce.

23. Dispositif d'alésage selon l'une des revendications précédentes, ledit dispositif d'alésage étant **caractérisé en ce qu'**il a une structure modulaire.

24. Dispositif d'alésage selon la revendication précédente, ledit dispositif d'alésage étant **caractérisé en ce qu'**il comporte un module d'alésage et/ou un module de carter et/ou un module de pied et/ou un module de traction.

25. Dispositif d'alésage selon l'une des revendications précédentes, **caractérisé en ce que** le foret (2) peut être remplacé avec le moteur d'entraînement monté.
